# EUROPEAN PATENT APPLICATION

(11) **EP 4 398 444 A2**
(43) Date of publication of application: **10.07.2024**
(21) Application number: 23218331.9
(22) Date of filing: 19.12.2023
(51) Int. Cl.: H02J 7/00, H01M 10/42

(54) **BATTERY APPARATUS WITH IDENTIFICATION-AND-WAKEUP INTEGRATED PORT**

(30) Priority: 04.01.2023 TW 112100260
(71) Applicant: Basso Industry Corp., Taichung 40768 (TW)
(72) Inventor: TSAI, Cheng-En, 407 Taichung (TW)
(74) Representative: 2K Patentanwälte Blasberg Kewitz & Reichel

(57) **Abstract**

A battery apparatus (10) is applied to an electronic apparatus (20). The battery apparatus (10) includes a battery management system (102), a plurality of batteries (104), and an identification-and-wakeup integrated port (106). The electronic apparatus (20) transmits a first voltage (202) to the battery management system (102) through the identification-and-wakeup integrated port (106). The battery management system (102) is configured to receive the first voltage (202) through the identification-and-wakeup integrated port (106) to inform the electronic apparatus (20) of a type of the batteries (104). The battery management system (102) is configured to receive the first voltage (202) through the identification-and-wakeup integrated port (106) to wake up the battery management system (102).

## Description

### BACKGROUND OF THE DISCLOSURE

### Technical Field

The present disclosure relates to a battery apparatus, and especially relates to a battery apparatus with an identification-and-wakeup integrated port.

### Description of Related Art

A battery apparatus is an essential component of various electric hand tools, and currently the most common battery apparatus is the lithium-ion battery.

A related art battery apparatus usually has many ports, such as a related art identification port, a related art wakeup port, a related art battery positive terminal, a related art charging positive terminal, a related art temperature port, and a related art battery negative terminal.

As to the function of the related art identification port: the electric hand tool or the charger may know a type of the related art battery apparatus through the related art identification port.

As to the function of the related art wakeup port: in the unpowered mode, the related art battery apparatus may enter the power-off mode to save more power, and the electric hand tool or the charger may wake up the related art battery apparatus through the related art wakeup port, so that the related art battery apparatus supplies power to the electric hand tool or the charger charges the related art battery apparatus.

However, currently the related art battery apparatus has too many ports, and this problem needs to be improved urgently.

### SUMMARY OF THE DISCLOSURE

In order to solve the above-mentioned problems, an object of the present disclosure is to provide a battery apparatus with an identification-and-wakeup integrated port.

In order to achieve the object of the present disclosure mentioned above, the battery apparatus of the present disclosure is applied to an electronic apparatus. The battery apparatus includes a battery management system, a plurality of batteries, and the identification-and-wakeup integrated port. The batteries are electrically connected to the battery management system. The identification-and-wakeup integrated port is electrically connected to the battery management system. Moreover, the electronic apparatus transmits a first voltage to the battery management system through the identification-and-wakeup integrated port. The battery management system is configured to receive the first voltage through the identification-and-wakeup integrated port to inform the electronic apparatus of a type of the batteries. The battery management system is configured to receive the first voltage through the identification-and-wakeup integrated port to wake up the battery management system.

Moreover, in an embodiment of the battery apparatus of the present disclosure mentioned above, the battery management system includes a battery identification circuit electrically connected to the identification-and-wakeup integrated port. Moreover, the electronic apparatus transmits the first voltage to the battery identification circuit through the identification-and-wakeup integrated port. The battery identification circuit is configured to receive the first voltage through the identification-and-wakeup integrated port to inform the electronic apparatus of the type of the batteries.

Moreover, in an embodiment of the battery apparatus of the present disclosure mentioned above, the battery management system further includes a battery wakeup circuit electrically connected to the batteries, the identification-and-wakeup integrated port, and the battery identification circuit. Moreover, the electronic apparatus transmits the first voltage to the battery wakeup circuit through the identification-and-wakeup integrated port. The battery wakeup circuit is configured to receive the first voltage through the identification-and-wakeup integrated port to wake up the battery management system.

Moreover, in an embodiment of the battery apparatus of the present disclosure mentioned above, the battery identification circuit includes an identification-side resistor electrically connected to the identification-and-wakeup integrated port and the battery wakeup circuit.

Moreover, in an embodiment of the battery apparatus of the present disclosure mentioned above, the battery identification circuit further includes an identification-side capacitor electrically connected to the identification-and-wakeup integrated port, the battery wakeup circuit, and the identification-side resistor.

Moreover, in an embodiment of the battery apparatus of the present disclosure mentioned above, the battery wakeup circuit includes a Schottky diode electrically connected to the identification-and-wakeup integrated port and the battery identification circuit.

Moreover, in an embodiment of the battery apparatus of the present disclosure mentioned above, the battery wakeup circuit further includes a first switch sub-circuit electrically connected to the Schottky diode.

Moreover, in an embodiment of the battery apparatus of the present disclosure mentioned above, the battery wakeup circuit further includes a second switch sub-circuit electrically connected to the first switch sub-circuit and the batteries.

Moreover, in an embodiment of the battery apparatus of the present disclosure mentioned above, the battery management system further includes a microprocessor electrically connected to the battery wakeup circuit.

Moreover, in an embodiment of the battery apparatus of the present disclosure mentioned above, the first voltage is 5 volts or 3.3 volts.

The advantage of the present disclosure is to reduce the number of ports of the battery apparatus.

Please refer to the detailed descriptions and figures of the present disclosure mentioned below for further understanding technologies, methods, and effects and achieving the predetermined purposes of the present disclosure. Further, the purposes, characteristics, and features of the present disclosure may be more deeply and specifically understood. However, the drawings are provided only for references and descriptions and not intended to limit the scope of the present disclosure.

### BRIEF DESCRIPTION OF THE DRAWINGS

Fig. 1 shows a block diagram of the first embodiment of the battery apparatus of the present disclosure.
Fig. 2 shows an appearance view of the battery apparatus of the present disclosure.
Fig. 3 shows a block diagram of the second embodiment of the battery apparatus of the present disclosure.
Fig. 4 shows a circuit diagram of an embodiment of the battery identification circuit and the battery wakeup circuit of the present disclosure.

### DETAILED DESCRIPTION

In the present disclosure, numerous specific details are provided, to provide a comprehensive understanding of embodiments of the present disclosure. However, those skilled in the art may understand that the present disclosure may be practiced without one or more of these specific details. In other instances, well-known details are not shown or described to avoid obscuring features of the present disclosure. The technical content and the detailed description of the present disclosure are as follows with reference to the figures.

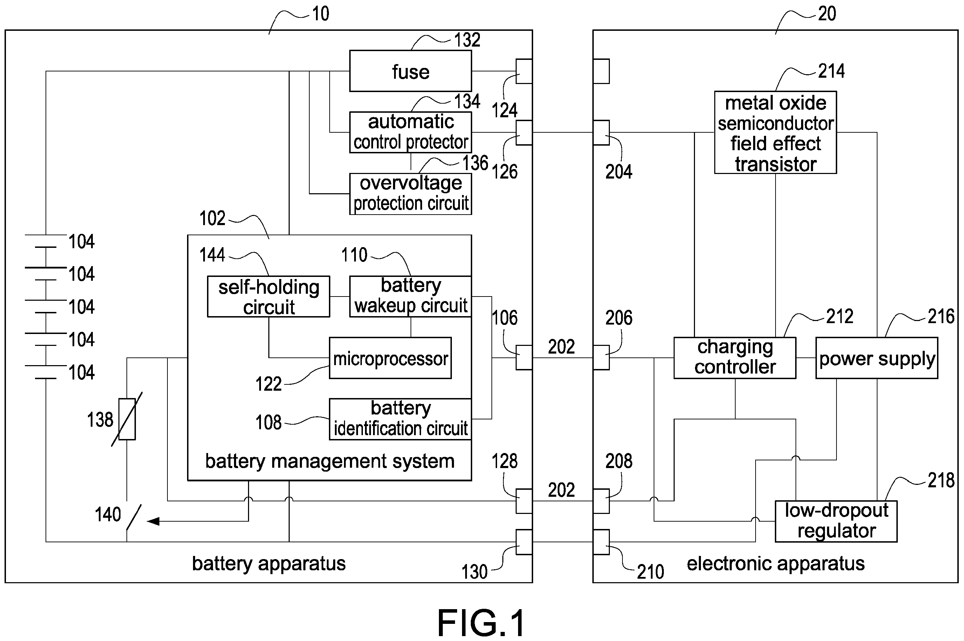

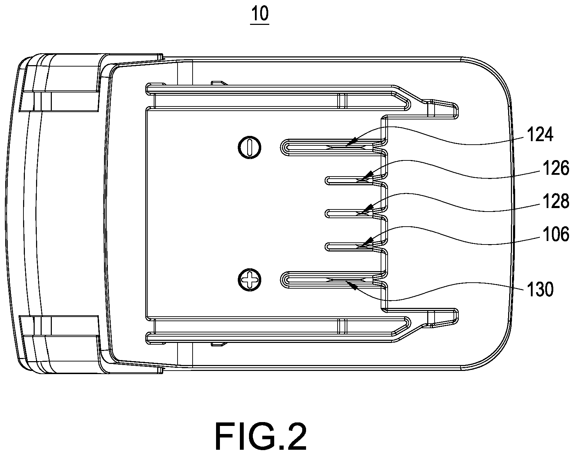

Fig. 1 shows a block diagram of the first embodiment of the battery apparatus 10 of the present disclosure. Fig. 2 shows an appearance view of the battery apparatus 10 of the present disclosure. A battery apparatus 10 of the present disclosure is applied to an electronic apparatus 20. The battery apparatus 10 includes a battery management system 102, a plurality of batteries 104, an identification-and-wakeup integrated port 106, a battery positive terminal 124, a charging positive terminal 126, a temperature port 128, a battery negative terminal 130, a fuse 132, an automatic control protector 134, an overvoltage protection circuit 136, a negative temperature coefficient thermistor 138, and a switch component 140. The battery management system 102 includes a battery identification circuit 108, a battery wakeup circuit 110, a microprocessor 122, and a self-holding (namely, self-maintenance) circuit 144. The components mentioned above are electrically connected to each other.

The electronic apparatus 20 shown in Fig. 1 is a charger. The electronic apparatus 20 includes an electronic-side charging positive terminal 204, an integration port 206, a temperature sensing terminal 208, an electronic-side battery negative terminal 210, a charging controller 212, a metal oxide semiconductor field effect transistor 214, a power supply 216, and a low-dropout regulator 218. The components mentioned above are electrically connected to each other.

The electronic apparatus 20 transmits a first voltage 202 to the battery identification circuit 108 and the battery wakeup circuit 110 of the battery management system 102 through the identification-and-wakeup integrated port 106. The battery identification circuit 108 of the battery management system 102 is configured to receive the first voltage 202 through the identification-and-wakeup integrated port 106 to inform the electronic apparatus 20 of a type (described in detail later) of the batteries 104. The battery wakeup circuit 110 of the battery management system 102 is configured to receive the first voltage 202 through the identification-and-wakeup integrated port 106 to wake up the battery management system 102 (described in detail later). The first voltage 202 is 5 volts or 3.3 volts.

In a normal condition, the procedures for inserting the battery apparatus 10 into the charger for charging are as follows: the charger provides the first voltage 202 to the identification-and-wakeup integrated port 106 and the temperature port 128 to determine the type of the batteries 104 and the temperature of the batteries 104, and to utilize the identification-and-wakeup integrated port 106 to wake up the battery management system 102; the charger detects the voltage of the batteries 104; the charger receives a temperature feedback signal (not shown in Fig. 1) through the temperature port 128 to know that the battery management system 102 has been awakened (described in detail later); after the charger determines the type of the batteries 104 and detects the voltage of the batteries 104, the charger starts charging the batteries 104.

In an abnormal situation, which means that when the batteries 104 are being charged, if the battery management system 102 detects that the batteries 104 are abnormal, the battery management system 102 turns off the switch component 140, so the charger no longer receives the temperature feedback signal through the negative temperature coefficient thermistor 138, so the charger determines that the battery apparatus 10 is abnormal, and then the charger stops charging the batteries 104.

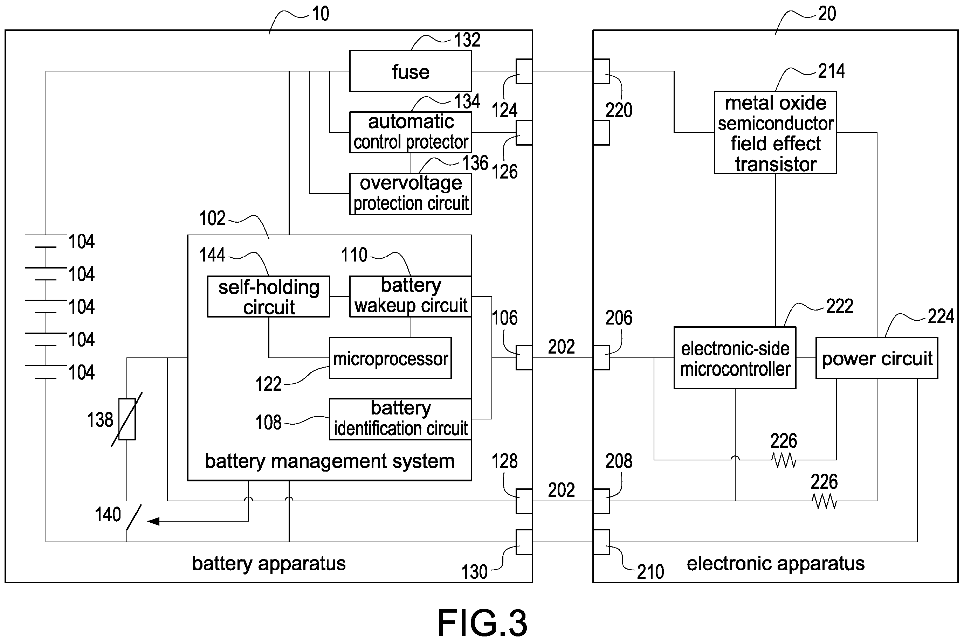

The switch component 140 is a MOSFET (such as an N-type MOSFET), and the negative temperature coefficient thermistor 138 is a 10K ohms negative temperature coefficient thermistor. The charger and an electric hand tool (namely, the electronic apparatus 20 shown in Fig. 3) further include a resistor (not shown in Fig. 1) with a resistance value of 10K ohms connected in series with the negative temperature coefficient thermistor 138, and an ADC (analog-to-digital converter, not shown in Fig. 1) is set between the 10K ohms resistor and the temperature sensing terminal 208.

When the battery apparatus 10 is in a sleep mode, the battery management system 102 turns off the switch component 140, so that the electronic apparatus 20 is not able to measure the resistance value of the negative temperature coefficient thermistor 138. After the electronic apparatus 20 wakes up the battery apparatus 10, the battery management system 102 turns on the switch component 140, so that the electronic apparatus 20 receives the temperature feedback signal to know that the battery management system 102 has been awakened, and then the charger as shown in Fig. 1 charges the batteries 104, and the electric hand tool as shown in Fig. 3 may be operated. If the battery apparatus 10 is not awakened, the charger as shown in Fig. 1 will not charge the batteries 104, and the electric hand tool as shown in Fig. 3 cannot be operated.

Fig. 3 shows a block diagram of the second embodiment of the battery apparatus 10 of the present disclosure. The descriptions of the elements shown in Fig. 3 which are the same as the elements shown in Fig. 1 are not repeated here for brevity. The electronic apparatus 20 shown in Fig. 3 is an electric hand tool. The electronic apparatus 20 includes an electronic-side battery positive terminal 220, an integration port 206, a temperature sensing terminal 208, an electronic-side battery negative terminal 210, an electronic-side microcontroller 222, a metal oxide semiconductor field effect transistor 214, a power circuit 224, and a plurality of electronic-side resistors 226. The components mentioned above are electrically connected to each other.

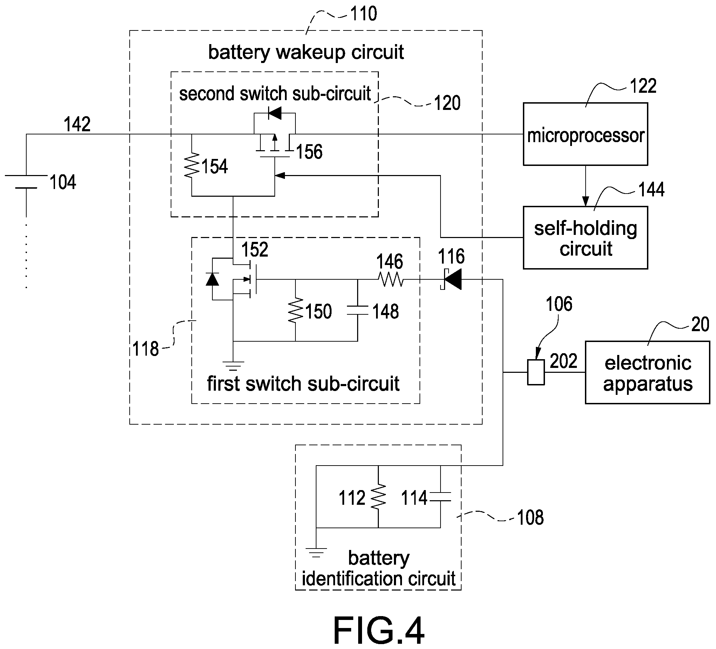

Fig. 4 shows a circuit diagram of an embodiment of the battery identification circuit 108 and the battery wakeup circuit 110 of the present disclosure. Please refer to both Fig. 1 and Fig. 3. The battery identification circuit 108 includes an identification-side resistor 112 and an identification-side capacitor 114. The battery wakeup circuit 110 includes a Schottky diode 116, a first switch sub-circuit 118, and a second switch sub-circuit 120. The components mentioned above are electrically connected to each other.

The identification-side resistor 112 is set by the circuit designer, so that different types of the batteries 104 have different identification-side resistors 112. For example, the resistance value of the identification-side resistor 112 of the batteries 104 of model 21700/5S1P (6A charging) is set to 5.5K ohms; the resistance value of the identification-side resistor 112 of the batteries 104 of model 21700/5S2P (6A charging) is set to 47K ohms; the resistance value of the identification-side resistor 112 of the batteries 104 of model 18650/5S1P (4A charging) is set to 1K ohm; the resistance value of the identification-side resistor 112 of the batteries 104 of model 18650/5S2P (6A charging) is set to 1.8K ohm.

The electronic apparatus 20 further includes a resistor (not shown in Fig.4) connected in series with the identification-side resistor 112. For example, for the charger as shown in Fig. 1, a 100K ohms resistor is set; for the electric hand tool shown in Fig. 3, if the first voltage 202 transmitted is 5 volts, a 2K ohms resistor is set, and if the first voltage 202 transmitted is 3.3 volts, a 1K ohms resistor is set. Moreover, the first voltage 202 transmitted by the charger as shown in Fig. 1 is 5 volts, and the first voltage 202 transmitted by the electric hand tool as shown in Fig. 3 may be 5 volts or 3.3 volts. Then, utilizing the Ohm's law, the resistor series formula, and so on, when the charger or the electric hand tool is connected to the battery apparatus 10, the charger or the electric hand tool may know the resistance value of the identification-side resistor 112 to determine the type of the batteries 104.

Moreover, the battery apparatus 10 may further include the Schottky diode 116, wherein an anode of the Schottky diode 116 is connected to the identification-and-wakeup integrated port 106 and the battery identification circuit 108, and a cathode of the Schottky diode 116 is connected to the battery wakeup circuit 110. The electronic apparatus 20 transmits the first voltage 202 to the battery wakeup circuit 110 through the identification-and-wakeup integrated port 106 and the Schottky diode 116. When two detection circuits (for example, the battery wakeup circuit 110 and the battery identification circuit 108) are used in parallel, there may be a problem of loading effect; the Schottky diode 116 of the present disclosure is used to prevent the battery wakeup circuit 110 and the battery identification circuit 108 from affecting each other; therefore, the present disclosure does not just simply combine the identification port with the wakeup port.

Moreover, the electronic apparatus 20 transmits the first voltage 202 to the first switch sub-circuit 118 through the identification-and-wakeup integration port 106 and the Schottky diode 116 to turn on the first switch sub-circuit 118. When the first switch sub-circuit 118 is turned on, the second switch sub-circuit 120 is configured to be turned on, so that the batteries 104 are configured to transmit a second voltage 142 to the microprocessor 122 through the second switch sub-circuit 120 to drive the microprocessor 122 to wake up the battery management system 102.

Moreover, the battery management system 102 further includes the self-holding circuit 144 electrically connected to the microprocessor 122 and the battery wakeup circuit 110. After the microprocessor 122 is driven, the microprocessor 122 is configured to utilize the self-holding circuit 144 to turn on or off the second switch sub-circuit 120.

Moreover, the first switch sub-circuit 118 includes a first resistor 146, a first capacitor 148, a second resistor 150, and a first transistor 152. The second switch sub-circuit 120 includes a third resistor 154 and a second transistor 156. The first resistor 146 is electrically connected to the Schottky diode 116. The first capacitor 148 is electrically connected to the first resistor 146. The second resistor 150 is electrically connected to the first resistor 146 and the first capacitor 148. The first transistor 152 is electrically connected to the first resistor 146, the first capacitor 148, the second resistor 150, and the second switch sub-circuit 120. The third resistor 154 is electrically connected to the first transistor 152, the batteries 104, and the self-holding circuit 144. The second transistor 156 is electrically connected to the first transistor 152, the batteries104, the self-holding circuit 144, the third resistor 154, and the microprocessor 122.

The advantage of the present disclosure is to reduce the number of ports of the battery apparatus. Moreover, the identification-and-wakeup integrated port 106 has two functions: first, the charger or the electric hand tool may identify the type of the batteries 104 through the identification-and-wakeup integrated port 106; second, the battery management system 102 is awakened through the identification-and-wakeup integrated port 106.

## Claims

1. A battery apparatus (10) applied to an electronic apparatus (20), the battery apparatus (10) comprising:
a battery management system (102);
a plurality of batteries (104) electrically connected to the battery management system (102); and
an identification-and-wakeup integrated port (106) electrically connected to the battery management system (102),
wherein the electronic apparatus (20) transmits a first voltage (202) to the battery management system (102) through the identification-and-wakeup integrated port (106); the battery management system (102) is configured to receive the first voltage (202) through the identification-and-wakeup integrated port (106) to inform the electronic apparatus (20) of a type of the batteries (104); the battery management system (102) is configured to receive the first voltage (202) through the identification-and-wakeup integrated port (106) to wake up the battery management system (102).

2. The battery apparatus (10) of claim 1, wherein the battery management system (102) comprises:
a battery identification circuit (108) electrically connected to the identification-and-wakeup integrated port (106),
wherein the electronic apparatus (20) transmits the first voltage (202) to the battery identification circuit (108) through the identification-and-wakeup integrated port (106); the battery identification circuit (108) is configured to receive the first voltage (202) through the identification-and-wakeup integrated port (106) to inform the electronic apparatus (20) of the type of the batteries (104).

3. The battery apparatus (10) of claim 2, wherein the battery management system (102) further comprises:
a battery wakeup circuit (110) electrically connected to the batteries (104), the identification-and-wakeup integrated port (106), and the battery identification circuit (108),
wherein the electronic apparatus (20) transmits the first voltage (202) to the battery wakeup circuit (110) through the identification-and-wakeup integrated port (106); the battery wakeup circuit (110) is configured to receive the first voltage (202) through the identification-and-wakeup integrated port (106) to wake up the battery management system (102).

4. The battery apparatus (10) of claim 3, wherein the battery identification circuit (108) comprises:
an identification-side resistor (112) electrically connected to the identification-and-wakeup integrated port (106) and the battery wakeup circuit (110).

5. The battery apparatus (10) of claim 4, wherein the battery identification circuit (108) further comprises:
an identification-side capacitor (114) electrically connected to the identification-and-wakeup integrated port (106), the battery wakeup circuit (110), and the identification-side resistor (112).

6. The battery apparatus (10) of claim 5, wherein the battery wakeup circuit (110) comprises:
a schottky diode (116) electrically connected to the identification-and-wakeup integrated port (106) and the battery identification circuit (108).

7. The battery apparatus (10) of claim 6, wherein the battery wakeup circuit (110) further comprises:
a first switch sub-circuit (118) electrically connected to the schottky diode (116).

8. The battery apparatus (10) of claim 7, wherein the battery wakeup circuit (110) further comprises:
a second switch sub-circuit (120) electrically connected to the first switch sub-circuit (118) and the batteries (104).

9. The battery apparatus (10) of claim 8, wherein the battery management system (102) further comprises:
a microprocessor (122) electrically connected to the battery wakeup circuit (110).

10. The battery apparatus (10) of claim 9, wherein the first voltage (202) is 5 volts or 3.3 volts.
